(19) Europäisches Patentamt

European Patent Office

Office européen des brevets

(11) **EP 0 814 642 A1**

(12) **EUROPEAN PATENT APPLICATION**

(43) Date of publication:
29.12.1997 Bulletin 1997/52

(51) Int. Cl.$^6$: **H05B 33/22**, H01L 33/00

(21) Application number: 96201714.1

(22) Date of filing: 22.06.1996

(84) Designated Contracting States:
AT BE CH DE DK ES FI FR GB IE IT LI NL PT SE

(71) Applicant:
Ultra Silicon Technology (UK) Limited
Bradford BD7 1DP (GB)

(72) Inventors:
• Stevens, Robert
West Bridgford, Nottingham (GB)

• Cranton, Wayne Mark
Bingley, West Yorkshire (GB)
• Thomas, Clive Barrington
Burton Joyce, Nottingham (GB)

(74) Representative:
Wharton, Peter Robert
Urquhart-Dykes & Lord
Inventions House
Valley Court, Canal Road
Bradford BD1 4SP (GB)

(54) **Improvements in efficiency of electroluminescent devices**

(57) A thin-film phosphor device including a phosphor layer (6a) sandwiched between two insulator layers (2a,4a), includes light guiding means (92) arranged to guide light generated within the phosphor layer in the desired direction. Alternatively or additionally, microstructures are provided, which are configured so as to maximise the amount of light which may be out-coupled from the device. The microstructures include micro-grooves (5), trenches or pits (7,9), micro-mirrors (18), or tapered edge facets (22).

## Description

The present invention relates to improvements in the efficiency of electroluminescent devices , particularly thin-film phosphor devices, said improvements having applications, inter alia, in the field of ultra high resolution miniature display systems and also in large area, low resolution display systems as well as high resolution printer arrays for electrographic printing.

The two light-emitting technologies to which the present invention is applicable are emissive thin-film phosphor displays such as cathode ray tubes (CRTs), plasma panels displays (PPDs), ac and dc electroluminescence displays (DCTFELDs and ACTFELDSs), vacuum fluorescent displays (VFDs), field emitting displays (FEDs) and cold cathode displays (COCDs), and as electrographic printer arrays including laterally emitting thin film (LETFEL) device and edge emitting LEDs and lasers where it is the solely reflected (scattered) lateral (edge) emission which is utilised for printer applications.

The utilisation of any thin-film phosphor device is dependent upon obtaining satisfactory extraction (i.e light out-coupling) of the light generated within the phosphor, and the present invention seeks to maximise this light out-coupling. In order to properly understand how the present invention works, it is necessary to consider the theory of how light out-couples in a "perfect" thin-film phosphor device.

Photopic emission from thin phosphor films results from the stimulation by either high energy electron bombardment of emitting centres (cathodo-/electro-luminescence) or absorption of wider than bandgap photons (photoluminescence). Geometric optics can define the light out-coupling efficiency from a luminescent thin-film phosphor, where it is assumed that the thin-film layer is flat, and all surfaces and dielectric interfaces are optically smooth and parallel.

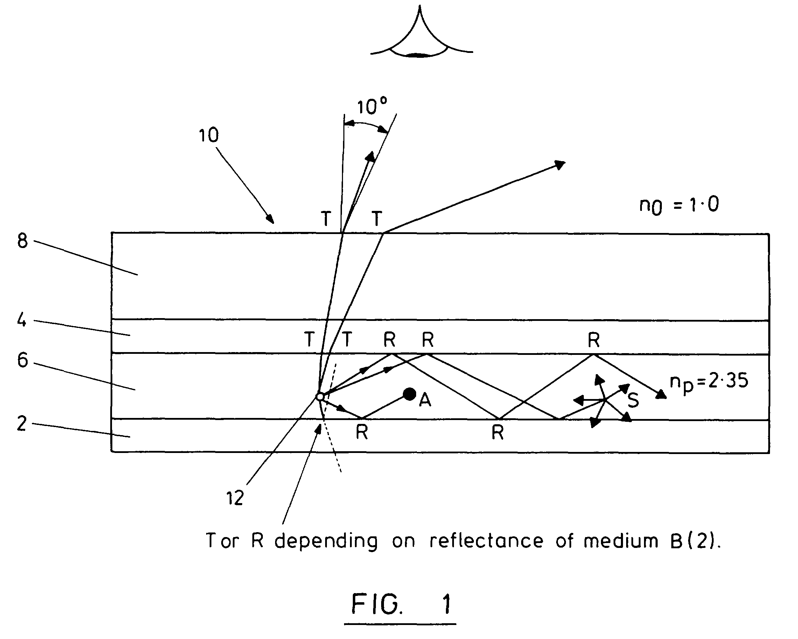

For an example, the light out-coupling process of a conventional ACTFELD structure is shown in Figure 1. The radiative emission profile of light emitting centres (within the phosphor layer) is assumed to be isotropic. A photon will propagate through the high refractive index phosphor layer until one of the following events occurs; transmission (T), reflection (R), scattering (S) or absorption (A). If it is assumed that scattering and absorption effects do not occur, the geometrically defined surface out-coupling efficiency $\eta_{out}$ of isotropically generated photons is defined by the following equation:-

$$\eta_{out}=0.5(1-\sqrt{1-\frac{n_o^2}{n_p^2}})$$

where $n_p$ is the refractive index of the phosphor layer (assuming all subsequent layers to have a lower value of refractive index), $n_0$ is the refractive index of the material with the lowest value of refractive index. For air,

$n_0 = 1.0$.

For ACTFELD pixels, where the phosphor layer is ZnS:Mn (refractive index, $n_p$=2.35) and air has the lowest value of refractive index ($n_0 = 1$), the calculated out-coupling efficiency is 5%. However, if medium A is transparent and medium B (see figure 1) is completely reflecting at the emitted wavelength, this is doubled to 10%.

However, in real devices scattering and absorption cannot be dismissed and hence there is modification to the out-coupling efficiency equation, possibly in favour of surface emission.

In practice, the deposited thin-film phosphor layers are polycrystalline with large number of volume and surface scattering centres, which results in a large lateral attenuation coefficient, causing difficulties in achieving satisfactory light out-coupling in conventional devices of this type.

The present invention stems from an appreciation of the fact that the scattering of laterally guided light can be beneficial to the surface out-coupling efficiency. However, not all of the laterally guided light is scattered, and whilst the remaining light is contained in medium A, medium B or the phosphor layer, there is a probability of absorption which detracts from the out-coupling efficiency.

The optical path length of laterally guided light before a beneficial scattering event occurs must therefore be as short as possible for maximum out-coupling efficiency.

According to one aspect of the present invention there is provided a thin-film phosphor device including a phosphor layer sandwiched between two insulator layers, wherein the device includes micro-structures configured so as to maximise the amount of light which may be out-coupled from the device.

This maximisation may, according to the invention, be achieved in a number of different ways -by deliberately incorporating specially fabricated microstructures acting as scattering centres (hereinafter referred to as scattering antennae) within the phosphor layer, so that the average distance travelled by a photon before being scattered so as to contribute to surface emission is minimised, or by the use of specially fabricated micro-structures to "guide" the light in the lateral direction which is then reflected (i.e converted to surface emission) after out-coupling, or by the use of specially fabricated microstructures comprising a specially shaped (tapered) edge emitting facet to the device to force light to be out-coupled, this then being reflected (converted to surface emission) after outcoupling. Clearly, the last two of these possibilities may be combined with great advantage, and such a combination would typically be utilised in applications using black (opaque) electrodes, whereas the former would typically be used with transparent electrode systems.

Thus, control of the optical path length can be achieved by the deliberate fabrication of these micro-structures which take the form of micro-mirrors, micro-grooves, features which have large waveguide bending losses, or tapered emitting facets in the phosphor or the cladding materials, which can be configured so that lateral emission is converted into beneficial surface emission. Where tapered emitting facets are utilised, these structures result in sequential reduction of the incident angle on the facet, until the incident angle is less than the critical angle (defined by Snells Law). The laterally contained light out-couples and can contribute to the useful surface emission.

Where the end result of the inclusion of the scattering antennae is conversion of lateral emission into surface emission, this may be further maximised by the inclusion of micro-lenses fabricated within or onto the device, directly above each emitting area. These micro-lenses may by either graded refractive index (GRIN) lenses within a transparent substrate, or alternatively they may be polymer and/or dielectric micro-lenses.

For all applications involving micro-lenses, there is a need to keep the light source at an appropriate distance from the curved surface of the lens, or the changing refractive index profile of a diffused lens. This ensures correct light manipulation (i.e focusing, collumnation, etc) and can be achieved by fabricating a pillar of transparent material to separate the lens from the light source by a pre-determined distance. These pillars may be fabricated from organic and inorganic thin films which are transparent to the emitted wavelengths.

Correct implementation of scattering antennae can provide an infinite lateral attenuation between pixels, this results from all the lateral light being converted to surface emission within the perimeter of the pixel. This is particularly important for ultra-high resolution systems, where optical cross-talk between pixels should be minimised.

The scattering antennae may take any one of a number of possible shapes, some of which are illustrated without limitation in the accompanying drawings. Typically, there would be a number of antennae within and/or around each pixel, although the pattern and number of the antennae may vary. The antennae may be formed in the phosphor layer itself, or in the insulator or cladding layers, or any combination of these.

For all displays the contrast-ratio (C-R) should be as large as possible, especially if operating conditions are in high ambient brightness. Preferably, the present invention further provides for the elimination of transparent electrodes, such as indium tin oxide (ITO) and replacement with either black electrodes or black layers improves the C-R. Only reflected lateral emission is utilised, conventional surface emission is blocked by the black opaque layers.

To increase the probability of out-coupling the micro-mirrors (micro-grooves) and emitting facets should preferably have "jagged edges". These can be defined by photolithography and wet and/or dry etching. In principal the following events would occur:

(i) Light is generated in the phosphor.

(ii) Light guides laterally.

(iii) Light hits an emitting facet.

(iv) Light with incident angles less than the critical angle out-couples. However light with incident angles greater than the critical angle is reflected. This internally reflected light, which would not contribute to useful surface emission is contained within the guiding layer.

(v) However, the jagged edge provides a very short path before the internally reflected light hits another part of the emitting facet. This time the light has an incident angle which is less than the critical angle. Out-coupling occurs. The shape of the emitting facet ensures out-coupling after a maximum of two facet interactions.

Conventional 600 pixels per inch ACTFELD displays have measured lateral attenuation coefficients as high as 13,000m$^{-1}$, which results in a lateral propagation length to a brightness 10% of the brightness at the edge of an emitting pixel of 175$\mu$m. Hence, pixels at >600 ppi resolution can expect optical crosstalk to at least the next 5 adjacent pixels. This degrades the contrast ratio of the display and the pixel efficiency. Even for low resolution systems (100 ppi), light generated at the periphery of the emitting pixel will couple into the adjacent pixel, and does not have such a drastic affect on contrast. By ensuring that the luminescence from a stimulated pixel does not couple to adjacent pixels, high contrast can be maintained. Present methods to reduce the cross-talk have been to incorporate black absorbing layers into the device structure. Displays which utilise these layers have lower out-coupling efficiencies than one with reflective (metallic layers). By utilising the laterally guided light for surface emission enhanced by the incorporation of microstructures according to the first aspect of the present invention, display pixels can achieve higher efficiencies and hence enhanced brightness.

In the field of displays and display systems, presently only ACTFELD technology utilises vacuum deposited thin-film phosphor layers, where the thickness of the phosphor layer is between 0.5$\mu$m to 1.0$\mu$m. Thin-film phosphors are being developed to produce full colour ACTFELDs, where the required colours are red, green, blue and black (no colour). However, the achievable brightness of the blue-emitting pixels is presently insufficient for commercial applications such as flat screen television and full-colour, high resolution computer terminals.

Improvements of the pixel brightness by improving the light out-coupling efficiency and eliminating optical cross-talk between pixels will provide a higher brightness blue surface-emitting structure, thus facilitating manufacture of monolithic full-colour ACTFELDs which meet commercial specifications.

Additionally, the use of microstructures for the reflection of laterally emitted light permits the use of opaque substrates and electrodes. This further permits the integration of thin film electroluminescent devices with addressing and drive circuitry to facilitate active matrix addressing. By way of example, silicon substrates may be employed with addressing circuitry such that low voltage data signals may be used to switch the high voltage ac drive signal in order to activate individual pixels. Such an addressing scheme facilitates high frequency drive signals, which further enhances ACTFEL luminance and thus realises the potential of the low efficiency blue phosphors.

This technology will then compete with present full-colour systems, such as CRTs and plasma panel displays. All future ultra high resolution display systems (UHRDs) based on CRTs, PPDs, DCTFELDs, ACTFELDs, VFDs, FEDs and COCDs, will require thin-film phosphor layers. The phosphor layer(s) of a pixel must be compatible with thin-film micro-fabrication techniques.

For example, high volume Si thin-film technologies have submicron feature sizes. Hence calibrated thin-film, phosphor processing techniques (growth, photolithography, physical/chemical etching, laser annealing/ablation) combined with standard Si technology can provide UHRDs. Fabrication of Si based or phosphor based micro-structures improves the out-coupling efficiency and eliminates optical cross-talk between pixels.

The aforementioned description relates primarily to display technology, and there now follows a discussion of how the invention may be utilised in the field of electrophotographic printer arrays.

Instead of a matrix or fixed legend format such as that used for displays, devices for use in printers form linear arrays of intense surface emitting light sources. Market competition requires that resolutions must be greater than 300 dots per inch (dpi). Excluding laser/polygon exposure systems, there remains only one low cost commercial alternative, namely the surface emitting l.e.d. array.

However, it is also possible to achieve electrographic printing with 400 dpi edge-emitting ACTFEL structures on glass substrates, or alternatively using LETFEL devices deposited on opaque Si substrates (die cut from these wafers are butted end-to-end to form image bar arrays).

According to a further aspect of the present invention there is provided an array of laterally emitting electroluminescent devices comprising a number of devices butted end-to-end, each device including an emitting edge, wherein the array includes means located between each pair of adjacent devices for reflecting the laterally out-coupled light from both of said pair of adjacent devices to contribute to a single light source.

Thus, intense, small aperture sources (typical dimensions are 1 micron by 40 microns for 600 dpi resolution) are formed by reflecting or scattering the laterally contained light. With this technique two LETFEL structures contribute to the useful surface emission for electrophotographic printing.

Preferably, micro-lenses are included in the array, to facilitate narrowing of the surface emission envelope, hence increasing the power coupling efficiency to SELFOC®GRIN lens arrays (SLAs), or even eliminating the need for GRIN lenses altogether.

Preferably, said reflecting means comprises a micro-mirror having two mutually inclined reflecting facets for reflecting light outcoupled from each device respectively in the same direction. A tapered structure may be utilised with this structure.

Yet a further aspect of the present invention seeks to address the problem of lateral attenuation coefficient of the phosphor thin-film. Measured values of radio frequency (RF) magnetron sputtered ZnS:Mn gives attenuation coefficients of $13,000m^{-1}$ and an effective depth to 10% of the initial brightness of $175\mu m$.

According to said further aspect of the present invention, there is provided a thin-film phosphor device including a phosphor layer sandwiched between two insulator layers wherein the device includes materials of high refractive index arranged so as to guide light generated within the phosphor layer in the desired direction.

This concept can be applied to displays and electrophotographic printer arrays utilising either direct lateral emission, reflected lateral emission, or reflected lateral emission combined with conventional surface emission.

Preferably, the high refractive index materials are incorporated as one or more guiding layers within the phosphor, channelling out in a "light pipe" laterally emitted light from "effective lengths" well in excess of $175\mu m$, but a very similar effect can be achieved by the inclusion of very high dielectric constant cladding layers, for example barium titanate ($BaTiO_3$). The refractive index of the cladding layer should be lower than the emitting phosphor layers, and the thickness of the cladding layer should be of the order of, or greater than $\lambda_o$, the vacuum wavelength of the emitted light.

Another alternative means of guiding the light is to include a "comb-like" structure to reduce the effective lateral attenuation coefficient. The comb material should have a higher refractive index than the emitting phosphor material and have a low lateral attenuation coefficient. The fingers of the comb guide light to a suitable facet/micro-structure. The edge profile of the comb's fingers refract the incident light towards the emitting facet and/or micro-structure.

Low attenuation within the phosphor light pipe layer is imperative and may be achieved by; a) growth of amorphous material, or b) laser annealing of the polycrystalline phosphor to reduce the density of scattering centres whilst preserving the integrity of the dielectric phosphor interface. Annealing of the interface reduces the efficiency of luminous excitation. Laser annealing ensures that both the luminous efficiency of the phosphor film, and the light guiding properties of the phosphor film are improved, but modification of the interface is minimised.

Further improvement in TFEL performance is achieved by the addition of sulphur to the deposition environment, to reduce the concentration of s vacancies in the phosphor film, and improve both stoichiometry and Mn incorporation. As an example, this may be achieved by deposition in an environment of $H_2S$ gas, or by the addition of S to the source materials.

Embodiments of the present invention will now be described, by way of example, with reference to the accompanying drawings, in which:

Figure 1 illustrates the light-outcoupling process in a conventional ACTFELD structure,

Figures 2a, 2b and 2c illustrate in cross section the incorporation of micro-structures in the various different layers forming a device of the present invention,

Figures 3a, 3b and 3c illustrate in cross section the use of additional processing to increase the useful surface emission,

Figures 4a, 4b and 4c illustrate the integration of micro-lenses into the substrate,

Figures 5a, 5b illustrate the use of micro-mirrors in the form of points and wedges,

Figure 5c illustrates an alternative method of transforming laterally guided light into useful surface emission, for point and wedges,

Figures 6a, 6b illustrate the use of micro-grooves in the form of pits and trenches,

Figure 6c illustrates an alternative method of transforming laterally guided light into useful surface emission, for pits and trenches,

Figures 7a, 7b and 7c illustrate the use of specially fabricated microstructures acting as emission apertures in opaque electrodes,

Figure 7d illustrates the principle of "light guiding" using high refractive index layers,

Figure 8 illustrates a tapered edge out-coupler,

Figure 9 illustrates a part of a pixel having black layers, micro-mirrors and micro-lenses,

Figure 9a illustrates a micro-lens incorporating a single layer pillar,

Figure 9b illustrates a micro-lens incorporating a multi-layer pillar,

Figures 10a through 10f illustrate various different versions of microstructures,

Figure 11 is a plan view of a single pixel,

Figure 12 is a plan view of single pixel utilising more complex micro-structures,

Figure 13a illustrates in plan view a microstructure in the form of a three pointed star,

Figure 13b is a plan view of a similar microstructure having a flat apex,

Figure 14 illustrates in perspective view a zig-zag microstructure,

Figure 15 illustrates a microstructure in the form of a three pointed star with zig-zag edges,

Figure 16 is a diagram of a preferred REFTFEL printhead for electrographic printers,

Figure 16a illustrates the fabrication of a linear array for use in printing applications,

Figure 16b illustrates in more detail the method of defining the electrical pathways for the array shown in Figure 16a,

Figure 16c illustrates the final configuration of the device,

Figure 17a is a side view of complete REFTFEL structure,

Figure 17b is a plan view of two adjacent REFTFEL devices showing interdigitated micro-mirrors illustrating optical confinement between adjacent sources,

Figure 18 comprises side and front views of a LETFEL device incorporating a low attenuation coefficient optical light pipe, and

Figure 19 illustrates examples of addressing/drive circuitry that may be fabricated into/onto the substrate to provide eg. (a) active matrix, and (b) passive matrix addressing of TFEL devices with outcoupling structures.

Referring to Figure 1 of the accompanying drawings, a conventional TFEL display 10, comprises an active phosphor layer or ACTFEL device 6 sandwiched between medium A (layer 4) and medium B (layer 2), with an upper transparent glass substrate 8 (for example, Corning 7059). Layers 2 and 4 are optional layers which may be insulating, semiconductor or metal layers, they may also be transparent, opaque, reflective or black. The choice depends upon the display type and the nature of the substrate, i.e. opaque or transparent.

Transmission, reflection, absorption and scattering events are indicated in Figure 1 as T,R,A and S respectively. An emitting centre 12 emits photons along a number of possible photon trajectories, which then propagate through the device as explained in detail at the beginning of this specification.

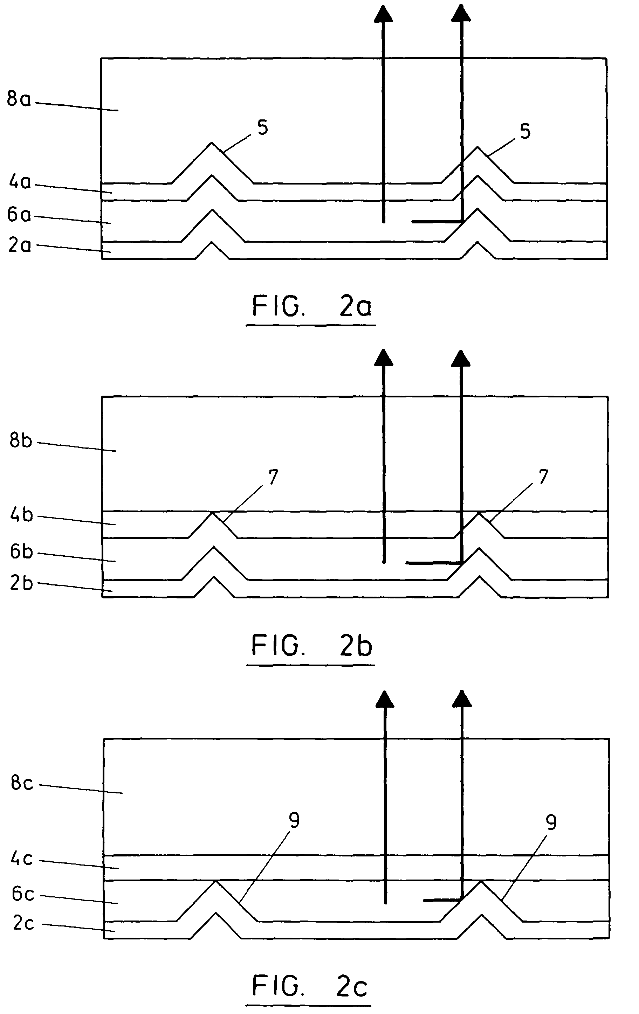

In order to maximise the useable surface emission, according to the present invention the device includes microstructures to scatter any light incident on them, in a direction which contributes to surface emission. For example, in Figure 2a, micro-grooves 5, which may form trenches or pits are fabricated into the transparent substrate 8a prior to the deposition of layer 4a (medium A), the thin-film phosphor(s) and layer 2a (medium B). The etched pits and/or trenches form small bend radii for the high refractive index phosphor layer 6a. A scattering structure is thus formed for the guide, which is beneficial to surface emission. Control of the etched profile will allow a preferred out-coupling direction, i.e. surface emission. Many scattering antennae in the form of these micro-grooves lie within the perimeter of one surface emitting pixel or surface emitting element. The cross-sectional profile, frequency, size and shape of the scattering antennae are adjusted to optimise the useful surface emission from each pixel. The scattering antennae increase the overall out-coupling efficiency and eliminate optical cross-talk. These effects increase pixel luminance and contrast ratio.

Alternatively, as shown in Figure 2b, micro-structures in the form of trenches or pits 7 fabricated into layer 4b (medium A), prior to the deposition of the thin-film phosphor layer(s) 6b and layer 2b (medium B), form scattering antennae which increase out-coupling efficiency, pixel luminance and contrast-ratio.

Alternatively, as shown in Figure 2c, micro-structures in the form of trenches or pits 9 fabricated into the phosphor layer 6c, prior to the deposition of optional layer 2c (medium B) (conducting/insulating layers) form scattering antennae which increases out-coupling efficiency, pixel luminance and contrast ratio.

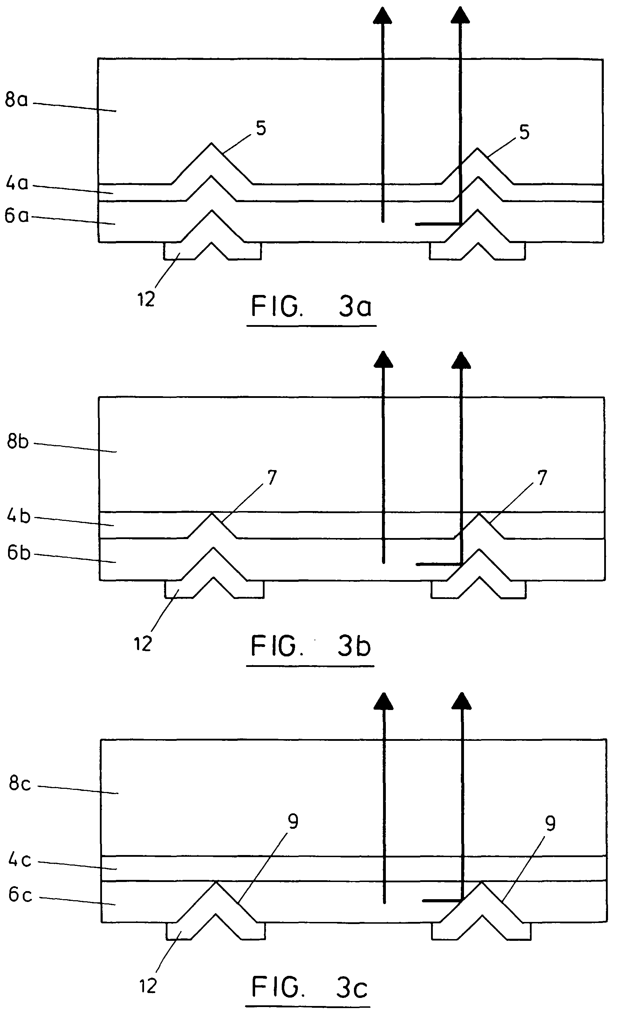

Micro-structures (5, 7, 9) can be defined in all cases as above. However, additional processing can increase the useful surface emission, see Figures 3a, 3b and 3c which correspond to Figures 2a, 2b and 2c respectively. This applies to device structures which do not normally incorporate medium B (the layer deposited after the phosphor layer). This second conducting/insulating layer 12, is reflective and patterned. Light, which is scattered by the micro-structure has a higher probability of contributing to the useful surface emission if a reflective mirror clads the back of the micro-structure. This causes light to be reflected in the direction of the observer.

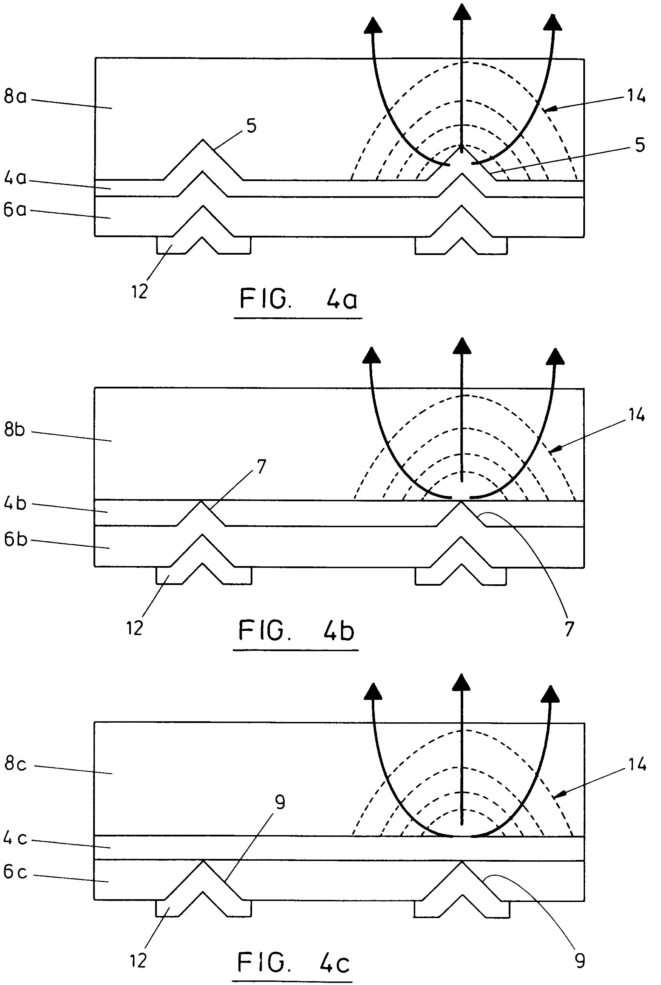

In applications where the acceptance cone is less than 10°, displays with lambertian or wide divergence are inefficient. Therefore, as illustrated in Figures 4a, 4b and 4c (which correspond to Figures 3a, 3b and 3c respectively), to increase the useful light, it would be advantageous to narrow the emission lobe (reduce the divergence) of the display's surface emission. For transparent glass substrates graded index refractive index (GRIN) micro-lenses 14 can be fabricated into the glass substrate 8a (8b,8c). Their fabrication can be by a process of either ion diffusion or ion-implantation. (Masking is compatible with photolithographic pattern transfer). This process defines regions (lenses) of a graded refractive index. These lens types can be utilised to narrow the emission lobe of light emanating from the microstructure 5, 7 or 9, where the cross-section of the lens forms a conic-section or hyperbola. A correct lens profile may even columnate the surface emission from one aperture. The light source (aperture) can be considered as a point source if the microstructure is a pit or a linear source if the micro-structure is a trench.

It would also be possible to integrate coloured micro-lenses using the same techniques (different ion dopants may provide different colour filters).

In Figures 1 to 4, the substrates 8 (8a, 8b, 8c) are all transparent, but for some applications the substrate might be opaque. For example, new applications of thin film phosphors are emerging with the development of an optoelectronic integrated circuits (OEIC) and hybridised miniature displays. This novel concept involves the deposition of ACTFEL devices onto integrated Si substrates (an opaque material at visible wavelengths). Miniature high resolution displays require high luminance and high contrast-ratios.

A further aspect of the present invention is the integration of laterally emitting ACTFEL devices with reflecting or out-coupling micro-structures (such as micro-mirrors) and addressing circuitry. Such active matrix TFEL devices may be employed as emitting elements for high resolution displays or as emitting elements for electrophotographic printing arrays.

In a preferred embodiment of this active matrix aspect of the present invention, a TFEL device is deposited onto (or near to) a drive/addressing circuit pre-fabricated into the substrate (eg silicon). Said circuit is fabricated such that when activated via low voltage data signals, a high voltage drive signal is applied across that TFEL device and emission from the TFEL device is initiated.

The important factor associated with this aspect of the present invention is that the use of micro-structures for the outcoupling of laterally emitted light does not require the use of transparent electrodes, as is the case with previously published active matrix TFEL devices.

A further embodiment of this aspect of the present invention comprises the integration of addressing/drive circuitry along the periphery of the display/printing array emitting regions. In such a configuration a refresh mode of operation (i.e passive matrix) may be employed. The integration of addressing/drive circuitry with light emitting pixels/elements is facilitated by the use of suitable opaque substrates and non-transparent surface electrodes. The incorporation of reflecting/outcoupling microstructures with the emitting elements and integrated addressing/drive circuitry results in improved luminous efficiency.

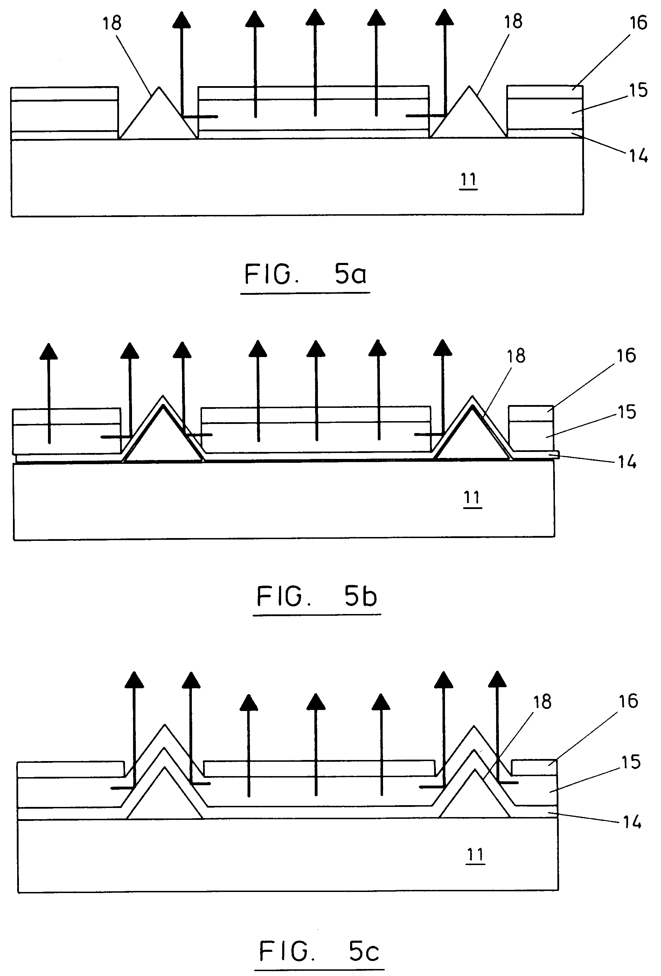

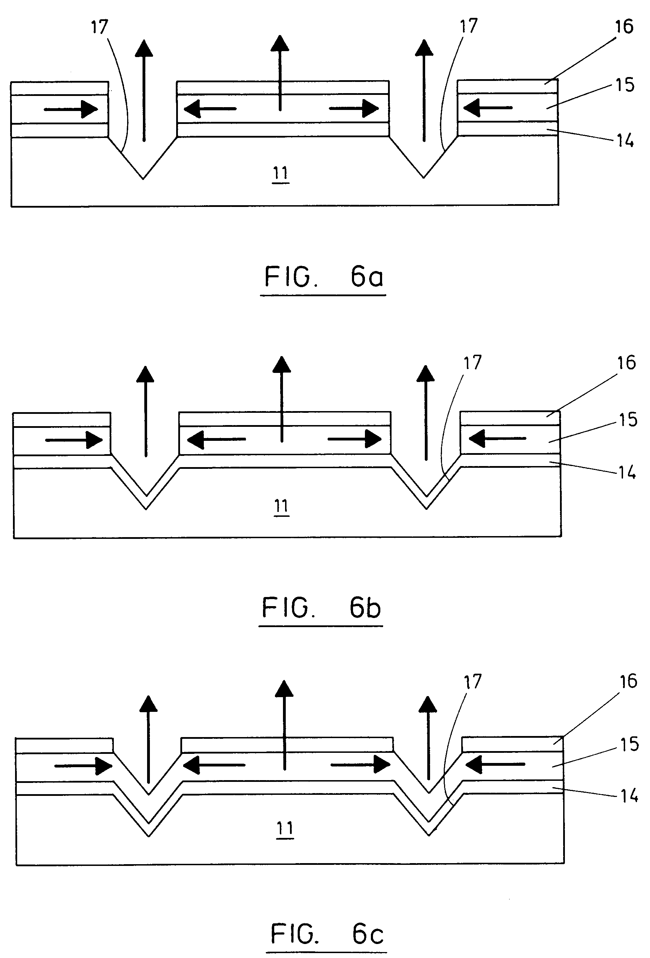

As illustrated in Figures 5a,5b and 6a,6b, photolithography and fabrication processes define micro-mirrors 18 (points, wedges) and micro-grooves 17 (pits, trenches) on an opaque substrate 11 where said substrate may contain pre-fabricated addressing/drive circuitry, thus facilitating active matrix and/or passive matrix addressing. These processes are performed prior to the deposition of layer 14 (medium A), phosphor layer 15 and layer 16 (medium B), the latter may be a transparent electrode. Ideally the micro-structure should be reflecting for visible wavelengths. Micromachining by either dry etching, ion-milling or laser ablation removes layer 14 (medium A), the phosphor layer(s) 15, and layer 16 (medium B) in the region of the microstructure 17,18 thus defining emitting facets and exposed micro-mirrors The facets are in close proximity to the micro-mirrors as shown in Figure 5a and results in reflection of the laterally guided light. The profile of the mirror 18 is such that it enables laterally guided light to contribute to normal surface emission. Shaped mirror surfaces (not shown) allow control of the preferred direction of the surface emission. The cross-section of a typical structures are shown in figures 5a, 5b for points and wedges and 6a, and 6b for pits and trenches. In Figures 5a and 6a, all three layers 14, 15 and 16 have been removed, whereas in figures 5b and 6b, only layers 15 and 16 have been removed, leaving layer 14 (medium A) as a "coating" to the microstructures 17, 18.

Planar waveguide bending losses can be incorporated into the thin-film phosphor devices. Again points, wedges, pits and trenches are fabricated into or on the substrate 11 prior to the deposition of the medium A, the phosphor layer and medium B. Conformal coating creates waveguide regions which have large bend losses (small bend radii). Laterally propagating light is out-coupled at these sites to form useful surface emission. This is an alternative method to transform laterally guided light into useful surface emission. A cross-section of a device is shown in figure 5c for points and wedges and figure 6c for trenches and pits.

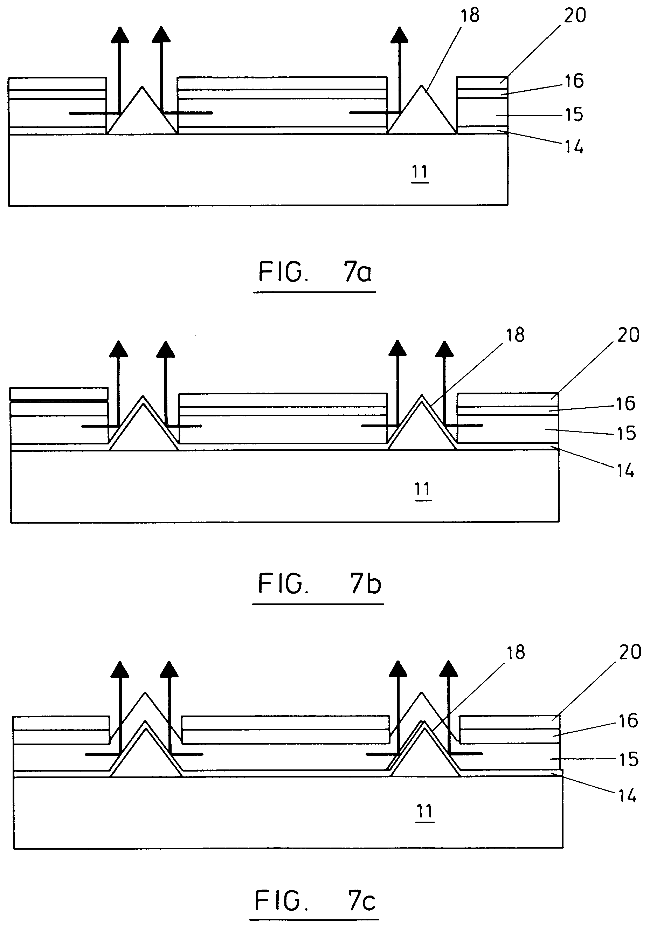

Contrast ratios can be increased if the electrode materials 20 are black. (In these devices no transparent conducting materials are used.) For these devices useful surface emitting light can only out-couple from the luminescent layer to the observer via the fabricated micro-structures, see figures 7a, 7b, and 7c. Only intense reflected lateral emission is observed, conventional surface emission is blocked. Hence each high contrast pixel is made from an array of intense micro-sources, for example the micro-mirrors 18.

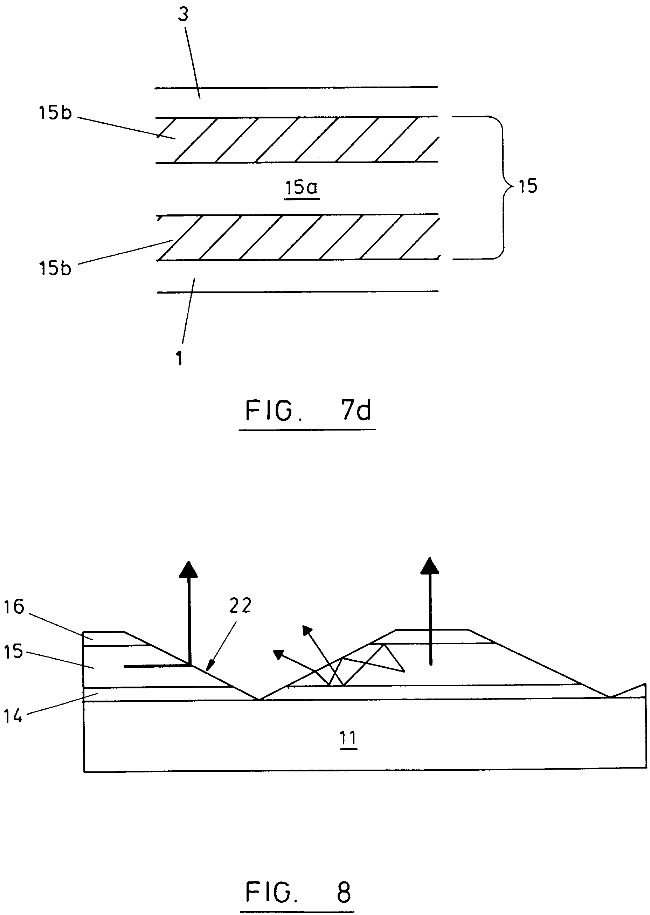

Illustrated in Figure 7d is the principle of "light guiding" in which the phosphor layer 15 bounded by insulator layers 1,3 (eg $Y_2O_3$) is comprised of a central "light pipe" 15a itself bounded by layers 15b (shown shaded) of refractive index greater than or equal to that of the central "light pipe" 15a. In practice, this can be achieved by using ZnS:Mn for both layers 15a, 15b, but by fabrication of the different layers at different temperatures, the necessary relative refractive indices can be effected.

Low temperature deposition of the ZnS:Mn or laser annealing of the deposited film reduce the attenuation coefficient and improve light guiding properties. Layers 15b may also be comprised of a low attenuating film with a higher refractive index than layer 15a. For example, 15a could be a TFEL layer structure comprising dielectric and phosphor films, with layers 15b comprising conducting transparent thin films with refractive index greater than that of the thin films of layers 15a (eg ZnSe:Al). The dielectric cladding layers 1 and 3 will have a lower refractive index than 15b, such that light is guided within 15b. The thickness of layers 1 and 3 is of the order of, or greater than $\lambda_o$, the vacuum wavelength of the emitted light.

Tapered edge facets 22 spanning all three layers 14, 15 and 16 are formed at areas typically taken up by the previously described micro-mirrors or micro-grooves, and in effect form microstructures in their own right which force the out-coupling of laterally guided light as effective surface emission. By controlling the taper profile or slope the preferred out-coupling direction of surface emitting light can be controlled. A diagrammatic cross-section of such a tapered out-coupler is shown in figure 8, this may be utilised alone or in conjunction with the previously described fabricated micro-mirrors or micro-grooves.

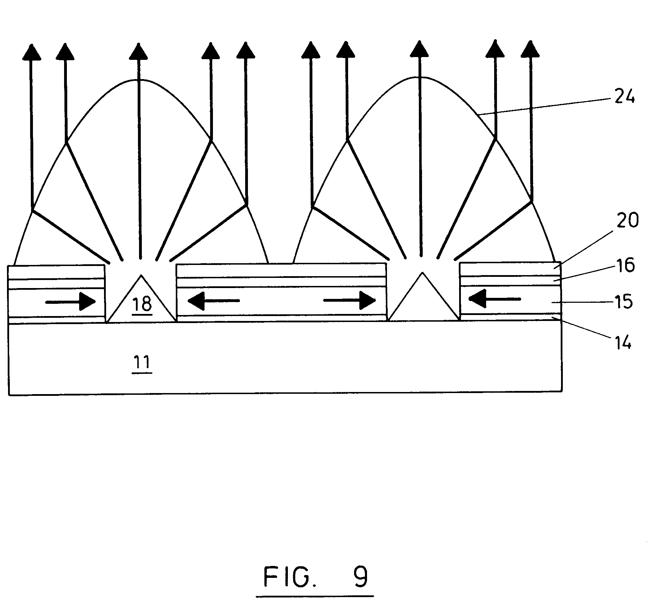

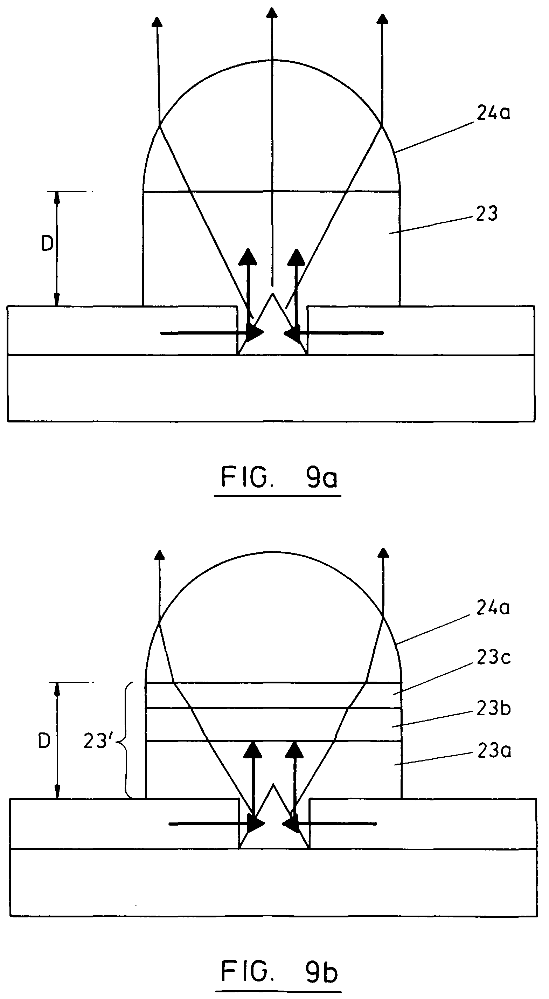

As for displays and printer arrays with transparent substrates, micro-lenses 24 can be utilised to narrow the emission profile, giving columnated reflected lateral transmission. Polymer films or dielectric films can be deposited and machined to form micro-lenses. These are formed over the micro-structures, which may have the form of a micro-mirror, micro-groove or tapered edge facet. A typical cross-section of part of a pixel which utilises black layers, micro-mirrors and micro-lenses is shown in figure 9 in which lithographically patterned micro-lenses narrow the angular distribution of the reflected lateral emission. This confinement is beneficial to certain types of displays because of the low acceptance cone angle of optical combiner systems. The overall effect will be improvements in system efficiency. The black layer 20 ensures micron size emission apertures, and the wide emission envelope from these sources can be narrowed by monolithic microlenses. Hence the display has high contrast, and high power coupling efficiency to combiner optics. These lenses may be either optically clear or alternatively they may be coloured so that they filter the phosphor emission.

Figures 9a and 9b illustrate the optimisation of light coupling, light collumnation or light fccusing, for applications with such requirements, such as electrophotographic printing and large area, small view angle displays, by fabricated a pillar 23 of transparent material to separate the lens 24a from the light source by a distance "D". In Figure 9a the pillar 23 is a single layer, but in Figure 9b the pillar 23' is formed from a multilayer stack to provide a GRIN (Graded Refractive Index Number) lens, for example three layers 23a, 23b and 23c, which structure optimises focusing efficiency, light confinement and light manipulation. The pillars may be formed from organic and inorganic thin films which are transparent to the emitted wavelengths.

Photon emission from a radiative centres within thin-film phosphors can either contribute to surface emission, propagate laterally, or be absorbed. Lateral emission can contribute to surface emission if a beneficial scattering event occurs. To get the maximum useful surface emitting light out of a fixed pixel area the following criteria should be followed.

(i) The area fill-factor of emissive thin-film phosphor, within the pixel area should be as high as possible.
(ii) The mean propagation length of laterally guided light (all emitting centres considered) before beneficial scattering, should be as short as possible.
(iii) No lateral light should propagate to adjacent pixels.
(iv) the cross-sectional profile of the scattering micro-structure(s) should optimise conversion of lateral emission to useful surface emission.

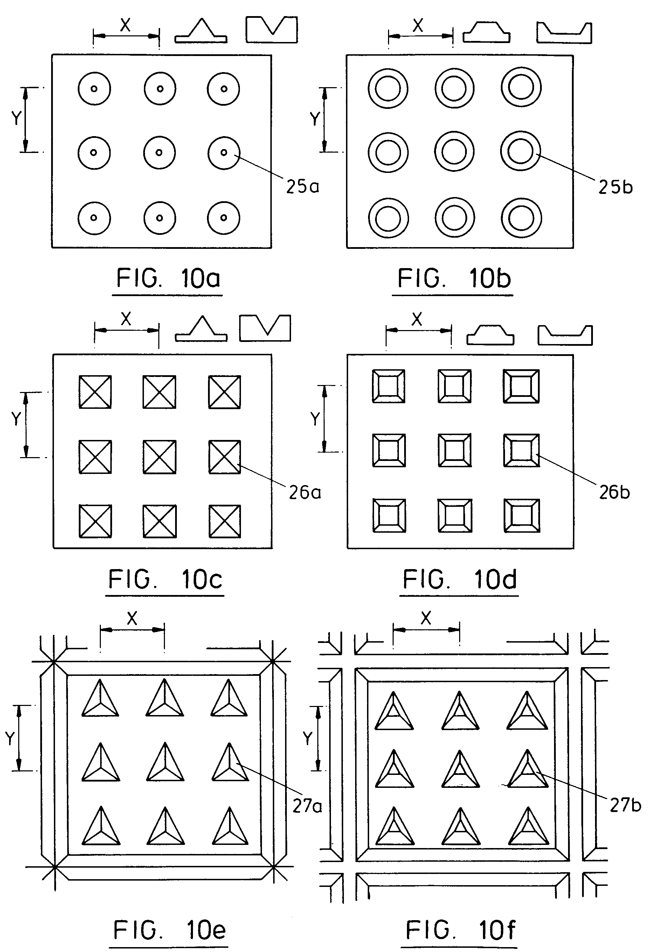

Shown in Figures 10 to 15 are plan views of various different micro-structures which can be considered for optimising surface out-coupling.

The area fill-factor of emitting phosphor is dependent on the spatial frequency and foot-print size of the points (pits) and truncated versions, see Figures 10a through 10f. The period between (i.e. x and y) have to be adjusted to optimise out-coupling efficiency. These structures (cones 25a, pyramids 26a and tetrahedrons 27a and truncated cones 25b, pyramids 26b and tetrahedrons 27b) do not minimise the lateral propagation length, so the trade off between area fill-factor and propagation length has to be considered.

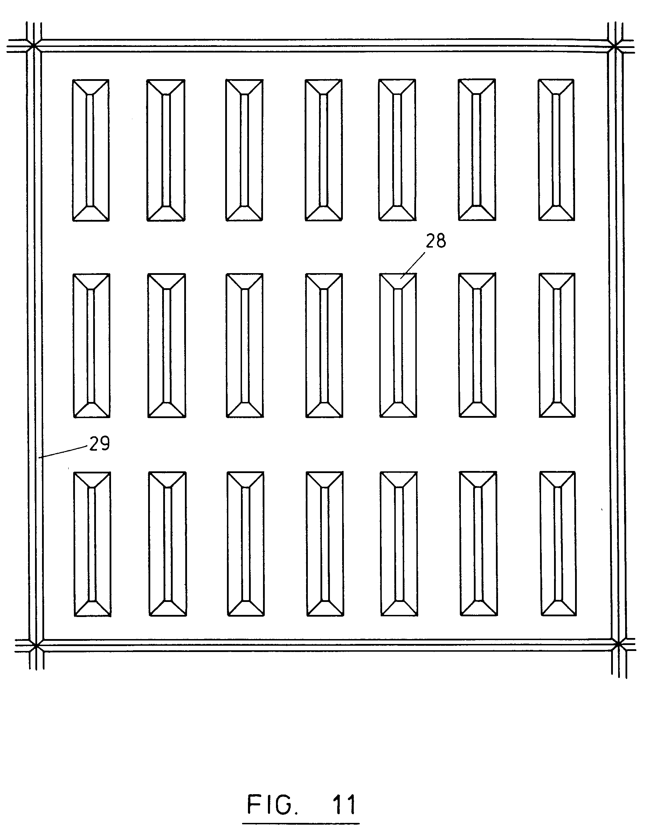

Structures resembling wedges and trenches can be simple lines or arcs, or take on more complex structures. Figure 11 shows an example of an array of linear micro-structures 28 in the form of internal micro-mirrors or micro-grooves which form rectangular apertures making up a single pixel and also illustrates a perimeter micro-mirror or micro-groove 29 defining the perimeter of the pixel. Even within this layout there are trajectories with long lateral propagation lengths before beneficial surface scattering.

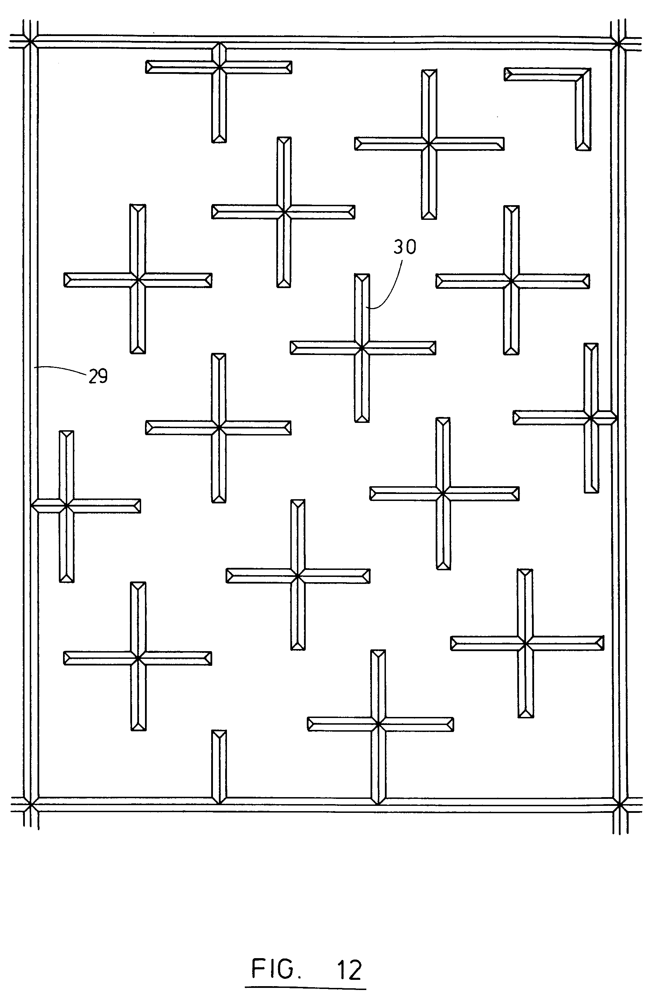

Figure 12 shows a similar shaped pixel as the one shown in Figure 11. This pixel utilises a more complex micro-structures (micro-mirrors or micro-grooves), namely a cross 30 (four pointed star), again with a micro-mirror or micro-groove 29 forming the perimeter of the pixel. It can be seen that the layout of these structures eliminates excessively long lateral propagation.

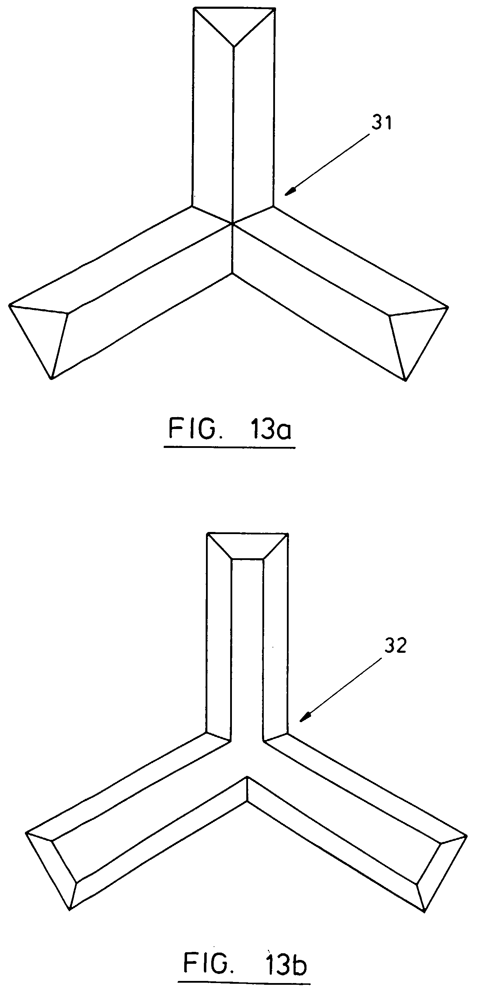

Shown in Figure 13a is an alternative structure, a micro-mirror or micro-groove in the form of a three pointed star 31. This has a smaller foot print size than its four pointed counterpart 30, but can still form arrays with short lateral propagation lengths. Shown in Figure 13b is a version 32 of the three pointed star, having a flat apex.

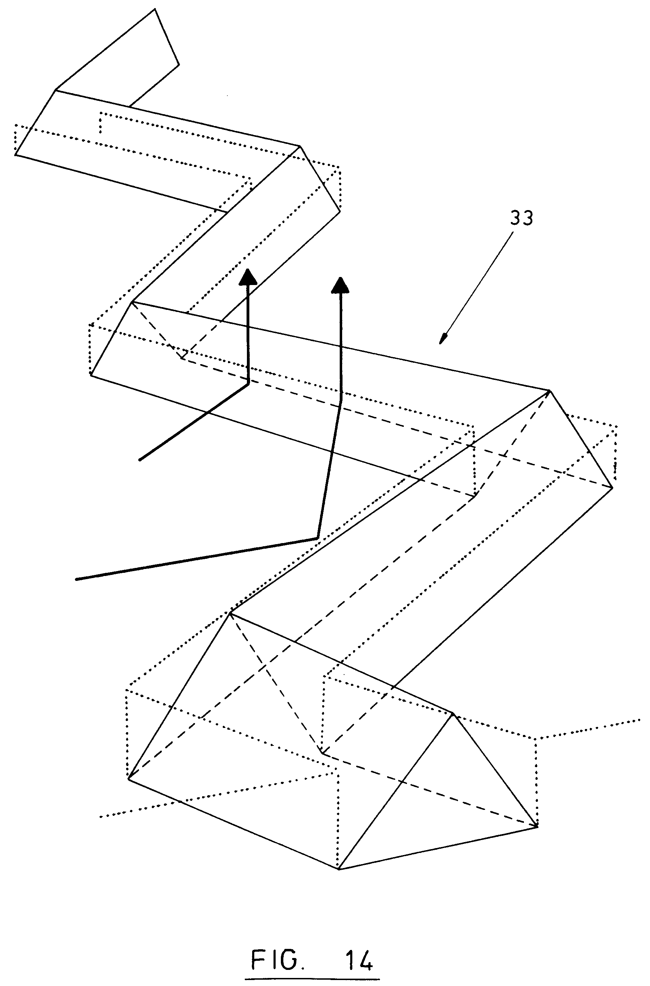

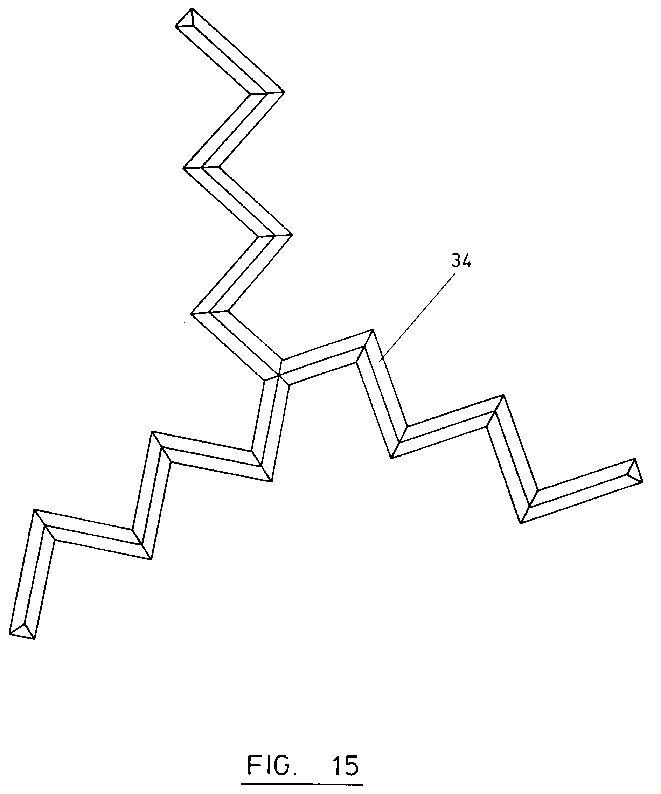

For all of the above plan views shown in Figures 11 to 13b, the mean propagation length can be reduced by forming a jagged or zig-zag micro-structure. Figure 14 depicts why a jagged profile 33 is beneficial, being designed to increase the probability of outcoupling, hence the 3 pointed star of Figure 13a should have zig-zag edges 34 as shown in figure 15 for maximisation of reflected lateral emission.

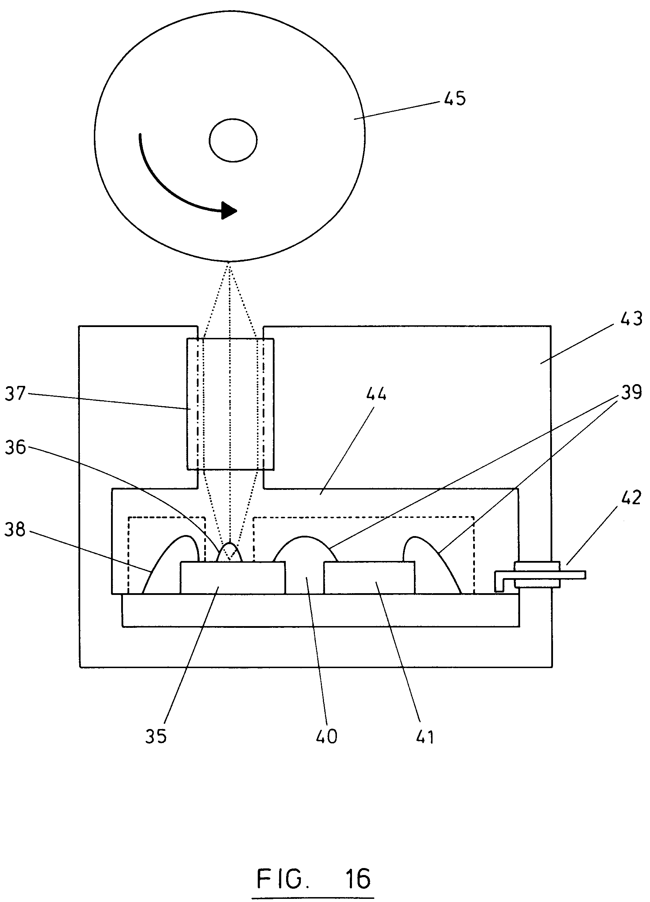

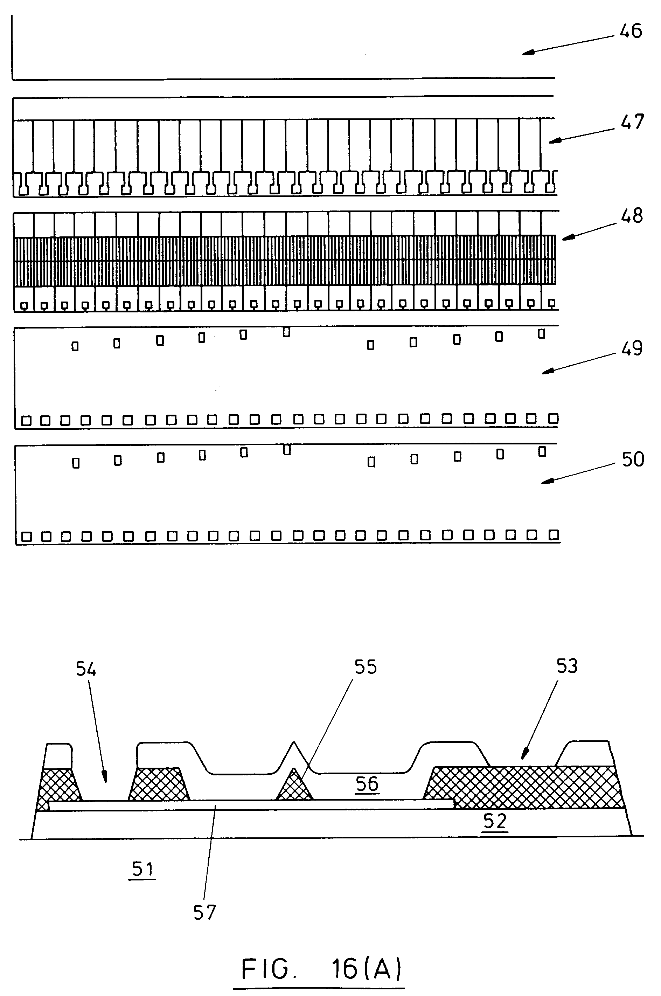

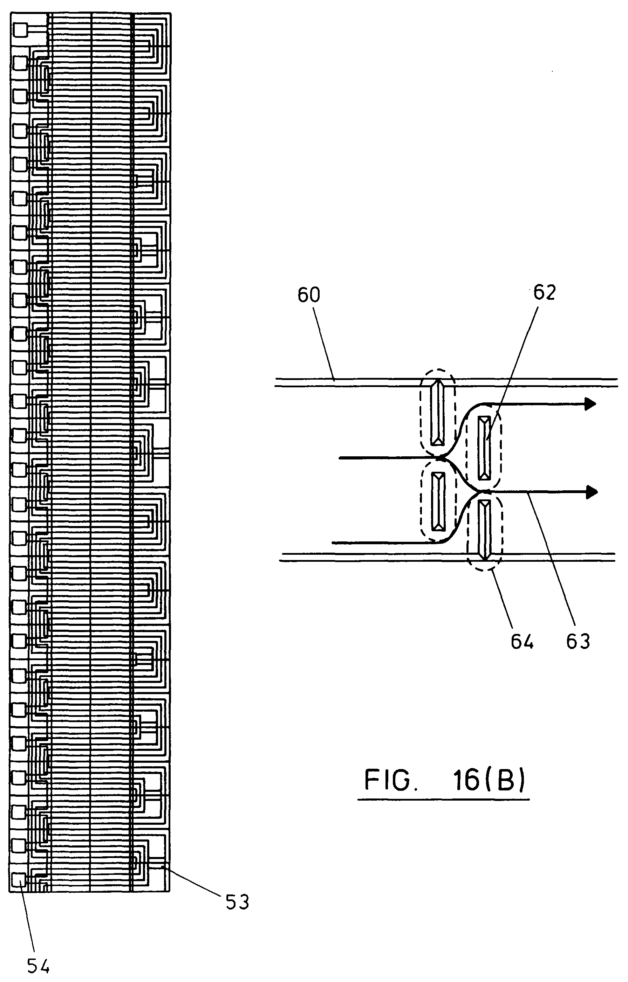

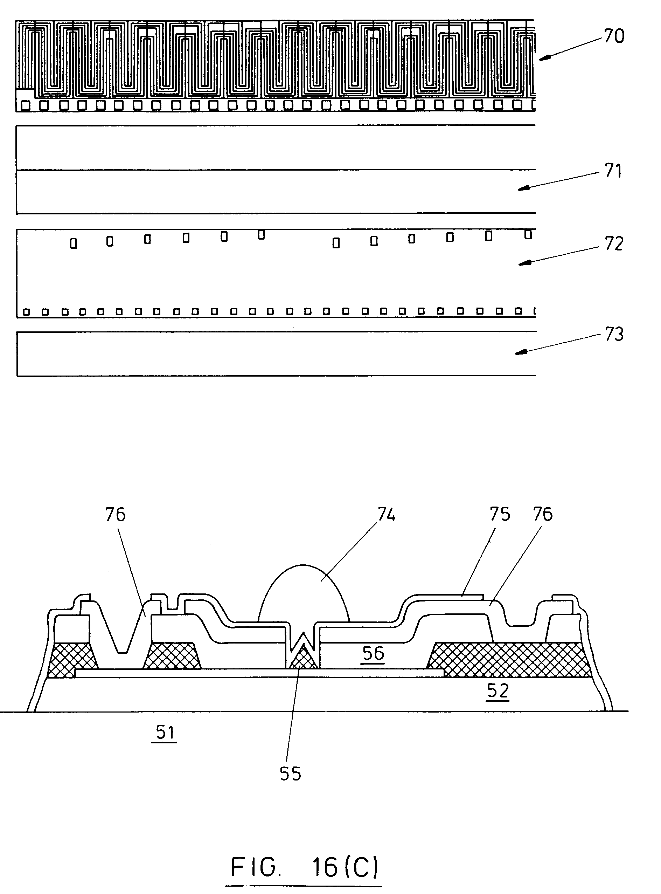

Figure 16 illustrates how the device of the present invention, here termed a REFTFEL, utilises the reflected lateral emission of a thin film electroluminescent device for electrophotographic printing applications.

REFTFEL die 35 (in the case of a device fabricated onto Si wafers) are butted end to end to form a linear array. Light energy (reflected lateral emission) is focused via micro-lenses 36 and/or GRIN lenses 37 onto the rotating drum 45 of a laser printer. The micro-structures of the present invention including micro-mirrors, micro-grooves and micro-lenses produce micro-light sources, where the divergent light energy is modified by the micro-lenses to enhance the coupling efficiency to the GRIN lens 37 and hence to the photosensitive drum. Typically, there would be twenty-seven REFTFEL die making up a single printhead array. It is envisaged that with proper configuration of the micro-lenses and micro-mirrors, a columnated beam may result, avoiding the need for the GRIN lens optics.

Other features illustrated in figure 16 are the wirebonds 38 for high voltage drive signals, wirebonds 39 for low voltage supply, pixel data and control signals, low voltage driver IC 41 with high voltage protection, wirebond encapsulation 40, connector 42 to external data and high voltage signals, silicone oil 44 for passivation and index matching, and printhead casing 43 which is air tight and vacuum filled with silicone oil.

Figure 16a shows a typical etching pattern for such a printhead array, comprising PECVD $SiO_2$ insulating raft etch 46, polysilicon electrode etch 47, $SiO_2$ (dielectric) etch 48 for sidewalls and micro-mirror via holes to LVB and HV insulation (not etched), EL (electroluminescent layer) etch 49 and optional further EL etch. After these fabrication stages, the cross section of the structure is as shown at the bottom of Figure 16a, comprising Si substrate 51, $SiO_2$ layer 52, $SiO_2$ micro-mirror 55 optionally coated with an improved reflector, eg Chromium, Polysilicon electrode layer 57, electroluminescent layer 56 and low and high voltage bondpad regions 54, 53 respectively.

Figure 16b is an exploded view of the micro-light source, showing, via a plan view of one REFTFEL, how electrical continuity can be maintained. Sidewalls 60 prevent cross-talk, and the electrical path (typically deposited aluminium) weaves in a continuous line around the micro-mirrors 62 and micro-lens footprints 64. Thus, only a single level of aluminium metallisation is required, giving fewer fabrication stages and hence higher process yield.

Figure 16c illustrates the etching patterns for the final fabrication stages of the device, namely aluminium etch 70, emitting facet etch 71, passivation $Si_3N_4$ etch 72 and micro-lens etch 73, giving the final configuration illustrated in cross section at the bottom of Figure 16c. This comprises Si substrate 51, $SiO_2$ layer 52, $SiO_2$ micro-mirror 55 optionally coated with an improved reflector, eg Chromium, Polysilicon electrode layer 57, electroluminescent layer 56, aluminium layer 76, passivation layer 75 and polymer (dielectric/conductive) micro-lens 74.

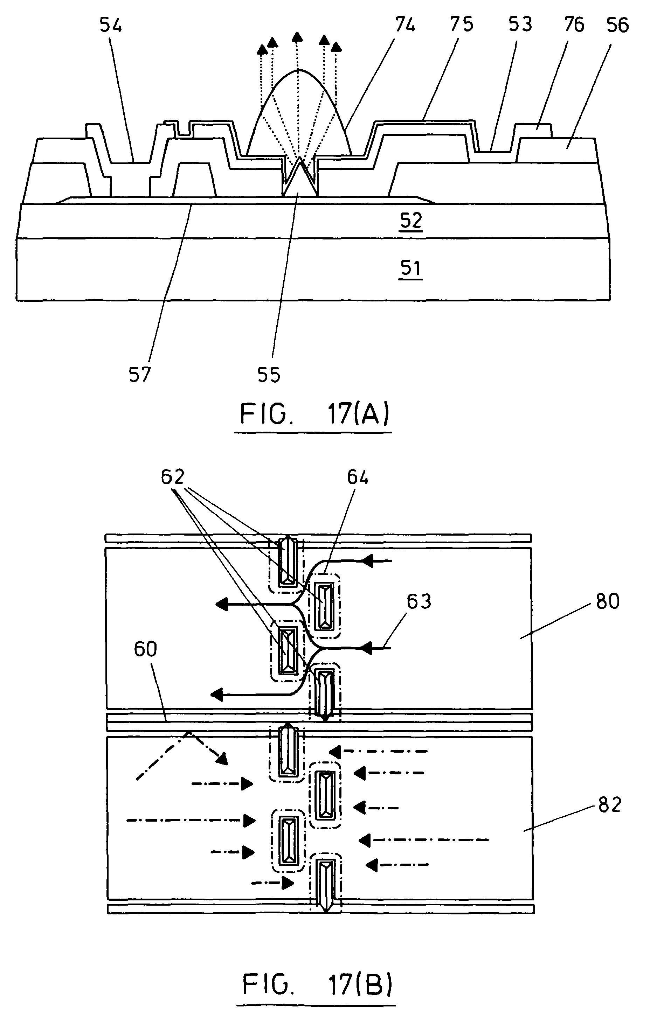

Figure 17a is an enlarged version of the cross-section shown in Figure 16c, and illustrates the narrow angular divergence of the light source emanating from the micro-lens 74. The micro-mirror 55 would typically be 1.5 $\mu$m across its base.

Figure 17b is a plan view of two adjacent REFTFEL devices 80 and 82 , with the device 80 being shown in the non-emitting state and the device 82 being shown in the emitting state. Typically, the dimensions of each REFTFEL would be 42.5 $\mu$m from side wall 60 to side wall 60, for 600 dpi printing applications.

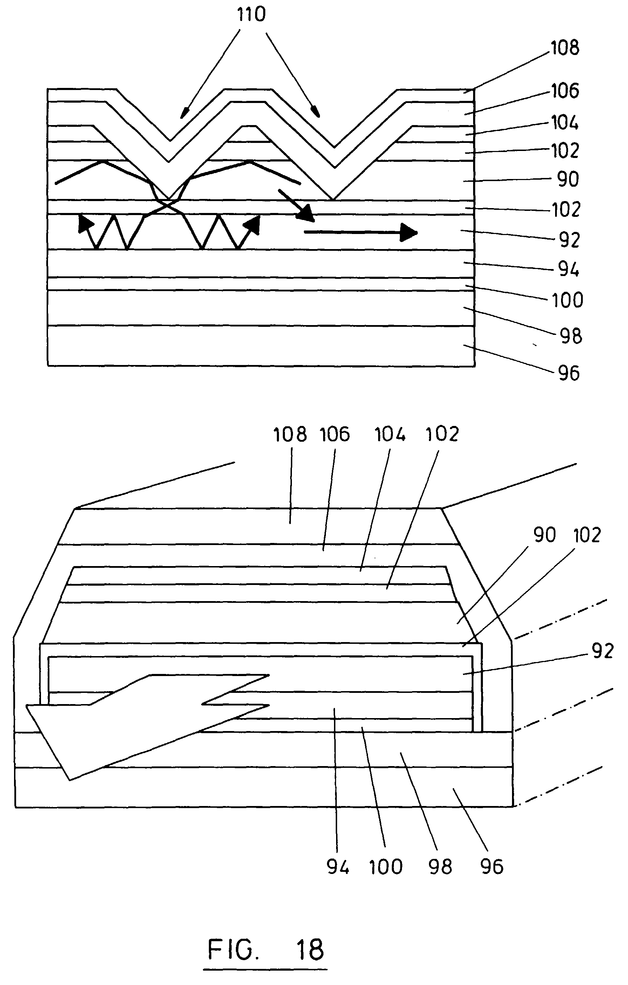

Shown in Figure 18 are two cross-sections of a structure according to the third aspect of the present invention, consisting primarily of two major parts, a light generating region and a low loss waveguiding layer. The former is formed from ZnS:Mn phosphor layer 90 with appropriate cladding and electrical contact. The latter is formed from a conductive, high refractive index material 92, for example ZnSe:Al (Zinc Selenide doped with Aluminium) which has a higher refractive index than that of ZnS:Mn. One of its cladding layers 94 is another transparent conductor, i.e Indium Tin Oxide (ITO) which has a refractive index lower than the ZnSe:Al. The other layers making up this device are Si or glass substrate 96, optical quality PECVD 98, polysilicon electrode 100, dielectric cladding layers 102, aluminium electrode 104, passivation layer 106 and reflective (aluminium) layer 108.

A series of microstructures 110 fabricated in the ZnS:Mn device forces light to couple into the low loss ZnSe:Al layer which then guides the light laterally. By etching the ZnSe:Al layer, one can form a light emitting facet as shown in Figure 18, and this may be used either with or without micro-mirrors.

An alternative is to make the dielectric cladding layer(s) 102 between the ZnSe:Al and the ZnS:Mn thin such that evanescent coupling occurs between the ZnS:Mn and the ZnSe:Al. The thickness of this cladding would be optimised such that the lateral attenuation is reduced. In this particular case, microstructures 110 may not be required to force light coupling.

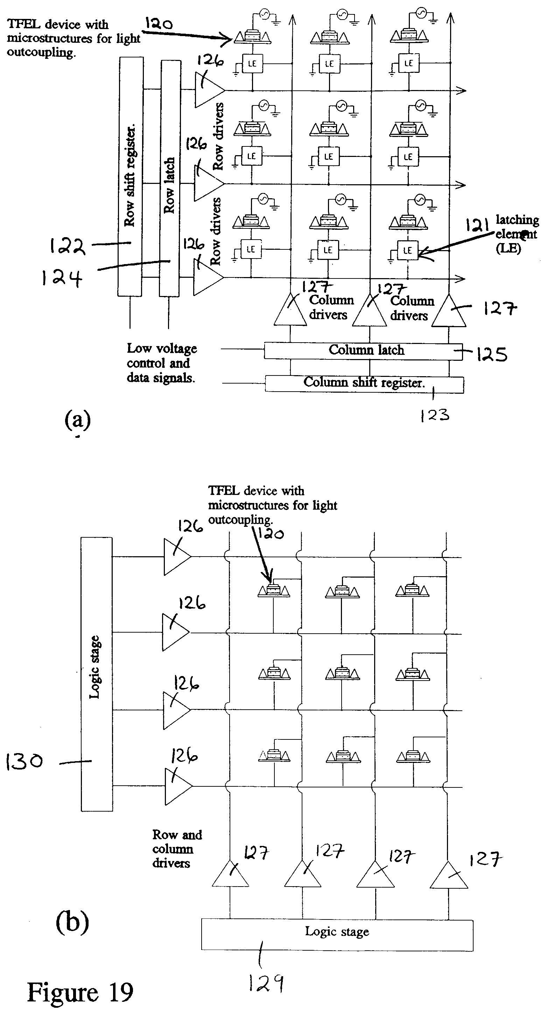

Figure 19 depicts two examples of the final aspect of the present invention, namely the integration of reflected laterally emitting TFEL device structures with addressing/drive circuitry, where reflecting/outcoupling micro-structures negate the requirements for transparent electrodes and improve the efficiency of TFEL emission.

Figure 19a illustrates an active matrix configuration of TFEL devices 120 with light outcoupling microstructures and associated circuitry comprising row and column drivers 126, 127 respectively, row latch 124 and row shift register 122, column latch 125 and column shift register 123 as well as latching elements 121. In operation, low voltage control and data signals are applied to latches and registers 122, 123, 124 and 125.

Figure 19b illustrates the same TFEL devices 120 arranged in a corresponding refresh, or passive matrix configuration with row and column drivers 126, 127 connected to logic stages 130 and 129 respectively.

In both cases the drive and addressing circuitry may be pre-fabricated into/onto the substrate.

## Claims

1. A thin-film phosphor device including a phosphor layer (90) sandwiched between two insulator layers (102) wherein the device includes light guiding means (92) arranged so as to guide light generated within the phosphor layer in the desired direction.

2. A device according to Claim 1 wherein the light guiding means comprises high refractive index materials (92) incorporated as one or more guiding layers within the phosphor.

3. A device according to Claim 1 wherein the light guiding means comprises very high dielectric constant cladding layers (92).

4. A device according to Claim 1 wherein the light guiding means comprises a "comb-like" structure of material having a higher refractive index than the emitting phosphor material and having a low lateral attenuation coefficient.

5. A thin-film phosphor device including a phosphor layer (6a) sandwiched between two insulator layers (2a, 4a), wherein the device includes micro-structures (5, 7, 9, 15a, 15b) configured so as to maximise the amount of light which may be out-coupled from the device.

6. A device according to Claim 5 wherein the micro-structures are located within the phosphor layer and configured in such a way that the average distance travelled by a photon before being scattered so as to contribute to surface emission is minimised.

7. A device according to Claim 5 wherein the micro-structures (15a, 15b) are fabricated so as to "guide" the light in the lateral direction for subsequent out-coupling.

8. A device according to Claim 5 wherein the micro-structures comprise one or more edge emitting facet (22) to the device, shaped to force light to be out-coupled.

9. A device according to Claim 7 or Claim 8 wherein the guided and/or out-coupled light is reflected to convert it to surface emission.

10. A device according to any of Claims 5 to 9 wherein the micro-structures comprise micro-mirrors (18), micro-grooves (17), features which have large waveguide bending losses, or tapered emitting facets (22) in the phosphor or the cladding materials, or any combination of these.

11. A device according to any of Claims 5 to 10, wherein the light out-coupled from the device is further maximised by the inclusion of micro-lenses (14, 24) fabricated within or onto the device, directly above each emitting area.

12. A device according to Claim 11, wherein the micro-lenses may be either graded refractive index (GRIN) lenses (14) within a transparent substrate, or alternatively they may be polymer (dielectric or conducting/non-conducting) micro-lenses (24), optionally including colourants to filter the light emission.

13. A device according to Claim 11 or Claim 12 wherein the micro-lens is separated from the emitting area by a pillar of material (23, 23') transparent to the emitted wavelength.

14. A device according to any of Claims 5 to 13, wherein the micro-structures have jagged edges (33, 34).

15. A device according to Claim 14, wherein the jagged edges are defined by photolithography and wet and/or dry etching.

16. A display comprising a number of devices according to any of Claims 5 to 15, wherein each device forms a display pixel, and the incorporation of micro-structures improves out-coupling efficiency and reduces/eliminates optical cross-talk between pixels.

17. An array of laterally emitting electroluminescent devices comprising a number of devices butted end-to-end, each device including an emitting edge, wherein the array includes means (55) located between each pair of adjacent devices (56) for reflecting the laterally out-coupled light from both of said pair of adjacent devices to contribute to a single light source.

18. An array according to Claim 17 and including micro-lenses (74) to facilitate narrowing of the surface emission envelope.

19. An array according to Claim 18 wherein the micro-lens (74) is separated from the emitting area by a pillar (23) of material transparent to the emitted wavelength.

20. An array according to Claim 19 wherein the pillar of material comprises Graded Refractive Index material.

21. An array according to any of Claims 17 to 20 wherein said reflecting means comprises a micro-mirror (55) having two mutually inclined reflecting facets for reflecting light outcoupled from each device respectively in the same direction.

22. A thin film electroluminescent device deposited on a substrate and including guiding means of any of Claims 1 to 4, or micro-structures of any of Claims 5 to 15, or laterally out-coupled light reflecting means of any of Claims 17 to 21, or any combination of the aforesaid features, and incorporating addressing/drive circuitry (121, 122, 123 ,124, 125, 126, 127, 129, 130) fabricated into or onto the substrate.

23. A device (or array of devices) according to any of the preceding Claims, wherein the or each device is electrically connected to addressing/drive circuitry (121, 122, 123 ,124, 125, 126, 127, 129, 130) fabricated into or onto the substrate to facilitate active or passive matrix addressing.

24. A device (or array of devices) according to Claim 22 or Claim 23, wherein said addressing/drive circuitry does not require the use of transparent electrodes and/or a gating device operating in its breakdown region.

EP 0 814 642 A1

$10°$

$10$

$n_0 = 1·0$

$8$

$4$

T  T  R  R                    R

$6$

$n_p = 2·35$

●A                              S

$2$

R            R

$12$

T or R depending on reflectance of medium B(2).

<u>FIG.   1</u>

FIG. 2a

FIG. 2b

FIG. 2c

FIG. 3a

FIG. 3b

FIG. 3c

8a

5

4a

6a

12

FIG. 4a

14

5

8b

7

4b

6b

12

FIG. 4b

14

7

8c

9

4c

6c

12

FIG. 4c

14

9

FIG. 5a

FIG. 5b

FIG. 5c

FIG.  6a

FIG.  6b

FIG.  6c

FIG. 7a

FIG. 7b

FIG. 7c

FIG.   7d

FIG.   8

FIG. 9

## FIG. 9a

## FIG. 9b

FIG. 10a

FIG. 10b

FIG. 10c

FIG. 10d

FIG. 10e

FIG. 10f

FIG. 11

FIG. 12

FIG. 13a

FIG. 13b

33

FIG. 14

34

FIG. 15

FIG. 16

46

47

48

49

50

54    55    53

56

52

51

57

FIG. 16(A)

54

53

60    62

64    63

FIG. 16(B)

70

71

72

73

76      74     75   76

56

52

51

55

FIG. 16(C)

FIG. 17(A)

FIG. 17(B)

FIG. 18

TFEL device with
microstructures for light
outcoupling.

120

126

Row shift register.

Row latch

Row drivers

Row drivers

126

126

Row drivers

122

124

121 latching
element
(LE)

127
Column
drivers

127
Column
drivers

127

Low voltage
control and
data signals.

Column latch — 125

Column shift register. 123

(a)

TFEL device with
microstructures for light
126 outcoupling.

120

126

Logic stage

126

126

130

Row and
column
drivers

127

127

127

127

(b)

Logic stage

129

Figure 19

European Patent
Office

**EUROPEAN SEARCH REPORT**

Application Number

EP 96 20 1714

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E | GB-A-2 296 378 (ULTRA SILICON TECHNOLOGY)<br>* the whole document *<br>--- | 1-24 | H05B33/22<br>H01L33/00 |
| A | US-A-5 455 883 (M.SHIGETA & AL)<br><br>* the whole document *<br>--- | 1-3,5,<br>11,15,16 | |
| A | US-A-5 124 543 (I.KAWASHIMA)<br>* the whole document *<br>--- | 1-3,7,17 | |
| A | EP-A-0 388 608 (MATSUSHITA ELECTRIC)<br>* the whole document *<br>--- | 1,10 | |
| A | EP-A-0 683 623 (AT & T)<br>* the whole document *<br>--- | 1,5 | |
| A | EP-A-0 615 401 (HITACHI)<br>* the whole document *<br>----- | 1 | |
| | | | **TECHNICAL FIELDS SEARCHED** (Int.Cl.6)<br><br>H05B<br>H01L |

The present search report has been drawn up for all claims

| Place of search | Date of completion of the search | Examiner |
|---|---|---|
| THE HAGUE | 18 November 1996 | Drouot, M-C |

EPO FORM 1503 03.82 (P04C01)